# EUROPÄISCHE PATENTSCHRIFT

(11) **EP 2 720 021 B1**
(45) Veröffentlichungstag und Bekanntmachung des Hinweises auf die Patenterteilung: **20.11.2019**
(21) Anmeldenummer: 13187627.8
(22) Anmeldetag: 07.10.2013
(51) Int. Cl.: G01L 1/22, G01L 1/26, G01P 15/08, G01N 3/06, G01M 7/02

(54) **Kraftmesseinrichtung**
Force measuring device
Dispositif de mesure de force

(30) Priorität: 10.10.2012 DE 102012109662
(43) Veröffentlichungstag der Anmeldung: 16.04.2014
(73) Patentinhaber: GTM Testing and Metrology GmbH, 64404 Bickenbach (DE)
(72) Erfinder: Seipel, Christoph, 63739 Aschaffenburg (DE)
(74) Vertreter: Habermann Intellectual Property Partnerschaft von Patentanwälten mbB

(56) Entgegenhaltungen:
- DE-A1-102011 082 708
- US-A- 4 478 086
- US-B1- 6 508 132

## Beschreibung

Die Erfindung betrifft eine Kraftmesseinrichtung mit einem Kraftaufnehmer, der einen Krafteinleitungsbereich und einen Kraftmessbereich aufweist, wobei in dem Kraftmessbereich ein Kraftsensor angeordnet ist, mit einer Einrichtung zur Ausübung dynamischer Kräfte auf den Kraftaufnehmer und mit einem an dem Kraftaufnehmer angeordneten Beschleunigungssensor.

Kraftmesseinrichtungen mit einem Kraftsensor, der über einen Krafteinleitungsbereich die auf den Kraftaufnehmer ausgeübten Kräfte erfassen und messen kann, sind aus der Praxis in zahlreichen Ausführungsformen bekannt. Derartige Kraftmesseinrichtungen eignen sich zur Messung von statischen und dynamischen Kräften. Beispielsweise kann in einer Prüfmaschine eine Kraftmesseinrichtung mechanisch in Reihe zu einem Probenspannzeug und zu einer zu prüfenden Probe angeordnet werden. Mit der Kraftmesseinrichtung kann die von dem Probenspannzeug auf die zu prüfende Probe ausgeübte Krafteinwirkung gemessen werden.

Bei einer statischen Kraftmessung wird eine vorgegebene Kraft über einen längeren Zeitraum ausgeübt und deren Auswirkung auf den Prüfling erfasst. Bei einer dynamischen Kraftmessung werden über einen längeren Zeitraum wechselnde Kräfte, beispielsweise Impulse, Vibrationen oder Rüttelbeanspruchungen auf den Prüfling ausgeübt und die Auswirkungen der sich ständig ändernden mechanischen Beanspruchung auf den Prüfling erfasst. In vielen Fällen kann ein Prüfling einer betragsmäßig wesentlich höheren statischen Beanspruchung standhalten, als es bei einer dynamischen Beanspruchung möglich ist.

Wird eine solche Kraftmesseinrichtung zur Messung statischer Kräfte verwendet, wirken dieselben Kräfte gleichermaßen auf die mechanisch in Reihe geschaltete Kraftmesseinrichtung wie auch auf das Probenspannzeug und die zu prüfende Probe. Durch eine geeignete Ausgestaltung der Kraftmesseinrichtung und des Probenspannzeugs können bei statischen Krafteinwirkungen sehr präzise Kraftmessungen durchgeführt werden.

Bei einer dynamischen Kraftmessung, bei der die zu prüfende Probe zusammen mit der Kraftmesseinrichtung dynamischen Kräften ausgesetzt wird, führen die durch die dynamische Krafteinwirkung erzwungenen Beschleunigungen der Massen, die sich zwischen der Kraftmessstelle und der zu prüfenden Probe befinden, zu einer Abweichung der an der Kraftmessstelle gemessenen Kraft von der auf die zu prüfende Probe einwirkenden Kraft. Der Kraftsensor erfasst dann nicht nur die auf die zu prüfende Probe einwirkende dynamische Kraft, sondern auch zu einem gewissen Anteil die auf den Kraftsensor und auf den Kraftaufnehmer sowie auf das Probenspannzeug ausgeübten dynamischen Beschleunigungskräfte. Die zusätzlich zu der zu prüfenden Probe beschleunigten Massen führen zu einem systematischen Messfehler, der mit zunehmender anteilig bewegter Masse des Kraftaufnehmers und des Probenspannzeugs sowie mit zunehmend dynamischer, bzw. mit stärker beschleunigender Krafteinwirkung ansteigt.

Beispielsweise aus EP 0 690 977, aus US 6,508 132 B1 oder aus US 4,478 086 A ist es bekannt, zusätzlich zu dem Kraftsensor einen Beschleunigungssensor an den Kraftaufnehmer anzuordnen und die auf den Kraftaufnehmer vorzugsweise im Bereich der Kraftmessstelle ausgeübten Beschleunigungen zu messen. Gemäß WO 02/058948 A1 kann es zweckmäßig sein, mehrere Beschleunigungssensoren so anzuordnen, dass die Richtung der Beschleunigung besser erfasst und für die Auswertung berücksichtigt werden kann.

Die mit dem einen Beschleunigungssensor oder mit mehreren Beschleunigungssensoren gemessene Beschleunigung ist bei Verwendung von idealen Beschleunigungssensoren proportional zu einem systematischen Messfehler, der bei einer Kraftmessung mit dem Kraftsensor auftritt. Mit den Messwerten des Beschleunigungssensors kann der systematische Messfehler des Kraftsensors in einfacher Weise reduziert, beziehungsweise nach Möglichkeit kompensiert oder korrigiert werden.

In der Praxis werden Kraftmesseinrichtungen der eingangs genannten Gattung, die einen Beschleunigungssensor zur Kompensation eines systematischen Messfehlers bei dynamischer Beanspruchung aufweisen, für zahlreiche Anwendungen mit völlig unterschiedlichen Anforderungen eingesetzt. Die meisten aus der Praxis bekannten Anwendungen betreffen dynamische Krafteinwirkungen mit Beschleunigungen zwischen einigen wenigen g, wobei 1 g = 9,81 m/s² einer mittleren schweren Beschleunigung entspricht, bis zu mehreren 10 g oder sogar einigen 100 g sowie niedrige Frequenzen von einigen Hz bis zu hohen Frequenzen in einem Bereich von etwa 1 kHz bis zu mehreren 10 oder sogar 100 kHz.

Die handelsüblichen und damit kostengünstigen Beschleunigungssensoren weisen häufig Empfindlichkeitskennlinien auf, die über einen begrenzten Frequenzbereich näherungsweise konstant sind und üblicherweise bei zunehmenden Frequenzen stark variieren. Eine Kraftmesseinrichtung mit einem Beschleunigungssensor, der in einem vorgegebenen Frequenzbereich und bei Beschleunigungen innerhalb eines ebenfalls vorgegebenen Bereichs ausreichend gute Messergebnisse ermöglicht, ist regelmäßig weniger geeignet für Kraftmessungen in einem anderen Frequenzbereich oder bei deutlich abweichenden Beschleunigungswerten.

In Abhängigkeit von dem vorgesehenen Verwendungszweck werden deshalb Kraftmesseinrichtungen mit einem für diesen Verwendungszweck möglichst geeigneten Beschleunigungssensor hergestellt und eingesetzt. Die Verwendung einer für einen ersten Anwendungsfall vorgesehenen und daran angepassten Kraftmesseinrichtung für andere Anwendungen ist dann oftmals nicht möglich oder mit erheblichen Qualitätseinbußen verbunden.

Es wird deshalb als eine Aufgabe der vorliegenden Erfindung angesehen, eine Kraftmesseinrichtung der eingangs genannten Gattung so auszugestalten, dass die Kraftmesseinrichtung für verschiedene Anwendungen mit unterschiedlichen Anforderungen geeignet ist.

Diese Aufgabe wird erfindungsgemäß dadurch gelöst, dass mindestens zwei Beschleunigungssensoren mit unterschiedlichen Empfindlichkeitskennlinien beabstandet zu dem Krafteinleitungsbereich an dem Kraftaufnehmer angeordnet sind, und dass ein erster Beschleunigungssensor eine näherungsweise konstante Empfindlichkeit bis mindestens 100 Hz und bei höheren Frequenzen eine abnehmende Empfindlichkeit aufweist, und dass ein zweiter Beschleunigungssensor eine näherungsweise konstante Empfindlichkeit bis mindestens 1 kHz aufweist. Die mindestens zwei Beschleunigungssensoren decken unterschiedliche Anforderungsbereiche ab, in denen jeweils einer der mindestens zwei Beschleunigungssensoren präzisere Beschleunigungsmessungen und damit eine bessere Erfassung und Kompensation der durch die zusätzlichen beschleunigten Massen erzeugten systematischen Messfehler ermöglicht. Indem die Kompensation des Messfehlers in Abhängigkeit von dem jeweiligen Anwendungsfall durch den für diesen Anwendungsfall am besten geeigneten Beschleunigungssensor von den mindestens zwei Beschleunigungssensoren durchgeführt wird, kann die Kraftmesseinrichtung über einen großen Anforderungsbereich eingesetzt werden und jeweils sehr präzise Messergebnisse liefern.

Die Kosten für die Herstellung oder Beschaffung sowie die Montage von mindestens zwei Beschleunigungssensoren in einer einzigen Kraftmesseinrichtung ist im Verhältnis zu den ansonsten erforderlich werdenden Kosten für die Herstellung von zwei verschiedenen Kraftmesseinrichtungen äußerst gering. Zudem kann durch die Verwendung von mindestens zwei Beschleunigungssensoren mit unterschiedlichen Empfindlichkeitskennlinien vermieden werden, dass für unterschiedliche Anwendungen jeweils verschiedene Kraftmesseinrichtungen hergestellt, beziehungsweise bereitgehalten werden müssen. Die Herstellungskosten für eine einheitliche Kraftmesseinrichtung, die mehrere Beschleunigungssensoren aufweist, sind insbesondere bei einer Serienherstellung äußerst gering. Der sehr große Anwendungsbereich der mit mehreren verschiedenen Beschleunigungssensoren ausgestatteten Kraftmesseinrichtung stellt für einen Anwender auch bei dem praktischen Einsatz einen großen Vorteil dar.

Beschleunigungssensoren, deren Empfindlichkeit nur bis etwa 100 Hz oder etwas darüber konstant sein soll und bei höheren Frequenzen merklich variieren darf, weisen in dem konstanten Empfindlichkeitsbereich bis etwa 100 Hz oftmals eine hohe Empfindlichkeit, bzw. einen hohen Übertragungskoeffizienten auf, der sehr präzise Beschleunigungsmessungen ermöglicht. Im Gegensatz dazu weisen Beschleunigungssensoren, deren Empfindlichkeit bis mindestens 1 kHz näherungsweise konstant sein soll, regelmäßig einen deutlich geringeren Übertragungskoeffizienten auf. Der erste Beschleunigungssensor kann vorteilhafterweise bis zu einer Frequenz von etwa 100 Hz verwendet werden, während bei höheren Frequenzen der zweite Beschleunigungssensor trotz des zunächst niedrigeren Übertragungskoeffizienten aufgrund der auch bei höheren Frequenzen gleichbleibenden Empfindlichkeit oftmals besser geeignet ist und präzisere Messungen ermöglicht. Eine sich in Abhängigkeit von der Frequenz stark verändernde Empfindlichkeit erschwert die Auswertung der Messsignale des betreffenden Beschleunigungssensors und führt oftmals zu schlechteren Messergebnissen.

Vorzugsweise ist vorgesehen, dass zwei verschiedene Beschleunigungssensoren an dem Kraftaufnehmer angeordnet sind. Es sind handelsüblich erhältliche Beschleunigungssensoren bekannt, deren Empfindlichkeitskennlinien sich ausreichend und in geeigneter Weise unterscheiden, sodass bereits mit zwei verschiedenen Beschleunigungssensoren eine große Anzahl verschiedener Anwendungsfälle abgedeckt werden kann. Durch die Beschränkung auf zwei verschiedene Beschleunigungssensoren können die Herstellungs- und Montagekosten einer mit nur zwei Beschleunigungssensoren ausgestatteten Kraftmesseinrichtung sehr gering gehalten werden.

Im Hinblick auf einen möglichst breiten Anwendungsbereich, über den hinweg möglichst präzise Kraftmessungen möglich sein sollen, ist vorgesehen, dass drei oder mehrere Beschleunigungssensoren mit jeweils unterschiedlichen Empfindlichkeitskennlinien an dem Kraftaufnehmer angeordnet sind.

Zweckmäßigerweise ist vorgesehen, dass die Kraftmesseinrichtung für jeden Beschleunigungssensor eine gesonderte Schnittstelle zum Verbinden mit einer Auswerteinrichtung aufweist. Die üblicherweise extern angeordnete Auswerteinrichtung wird von einem Anwender mit dem für den betreffenden Einzelfall vorteilhaften und deshalb ausgewählten Beschleunigungssensor verbunden, sodass die Messergebnisse dieses Beschleunigungssensors zur Korrektur und Kompensation des systematischen Messfehlers verwendet werden können. Über die Auswahl der für die Verbindung mit der Auswerteinrichtung verwendeten Schnittstelle kann der Anwender in einfacher Weise die für den jeweiligen Anwendungsfall bevorzugte Konfiguration der Kraftmesseinrichtung, beziehungsweise den jeweils am besten geeigneten Beschleunigungssensor auswählen.

Es ist ebenfalls denkbar, dass eine Steuerungseinrichtung in die Kraftmesseinrichtung integriert wird, die selbsttätig die auftretenden Beschleunigungen überwacht und in Abhängigkeit von den Überwachungsergebnissen den jeweils geeigneten Beschleunigungssensor aktiviert, bzw. für die Auswertung verwendet und dessen Messwerte an die Auswerteeinrichtung übermittelt oder freigibt.

In vielen Fällen werden Kraftsensoren für die Kraftmessung mit der Kraftmesseinrichtung verwendet, die über sechs elektrisch leitende Kontakte mit der Auswerteinrichtung verbunden werden müssen, um die anfallenden Messwerte an die Auswerteinrichtung zu übertragen. Insbesondere bei einer derartigen Ausgestaltung des Kraftsensors ist es vorteilhaft, wenn die Kraftmesseinrichtung zwei verschiedene Beschleunigungssensoren aufweist, die über eine gemeinsame Steckverbindung mit vorzugsweise sechs elektrischen Kontakten mit einer Auswerteinrichtung verbindbar sind. Für die zwei Beschleunigungssensoren und für den Kraftsensor kann jeweils eine gleiche Steckverbindung verwendet werden, wodurch zusätzlich Herstellungskosten eingespart werden können.

Gemäß einer vorteilhaften Ausgestaltung des Erfindungsgedankens ist vorgesehen, dass die mindestens zwei Beschleunigungssensoren jeweils ein MEMS-Sensor sind. Mikro-Elektro-Mechanische Systeme (MEMS), beziehungsweise MEMS-Sensoren können kostengünstig als Kleinstsensoren mit einer Baugröße von beispielsweise 5 x 5 x 2 mm³ hergestellt werden. Aufgrund der geringen Abmessungen und damit einhergehenden geringen Masse ist der Einfluss der MEMS-Sensoren auf den Kraftsensor bei einer dynamischen Krafteinwirkung vernachlässigbar gering. Handelsübliche MEMS-Sensoren weisen sehr geringe Herstellkosten und eine sehr hohe Robustheit auf, wobei geeignete MEMS-Sensoren üblicherweise eine 100fache dauerhafte Überlastung ohne Beschädigungen und ohne eine anhaltende Beeinträchtigung der Messsignale und der Messwerte überstehen.

Nachfolgend wird ein Ausführungsbeispiel des Erfindungsgedankens näher erläutert, das in der Zeichnung dargestellt ist. Es zeigt:
Fig. 1 eine schematische Ansicht einer Kraftmesseinrichtung mit einem Kraftsensor und mit zwei Beschleunigungssensoren,
Fig. 2 eine Empfindlichkeitskennlinie für einen ersten Beschleunigungssensor, und
Fig. 3 eine Empfindlichkeitskennlinie für einen zweiten Beschleunigungssensor.

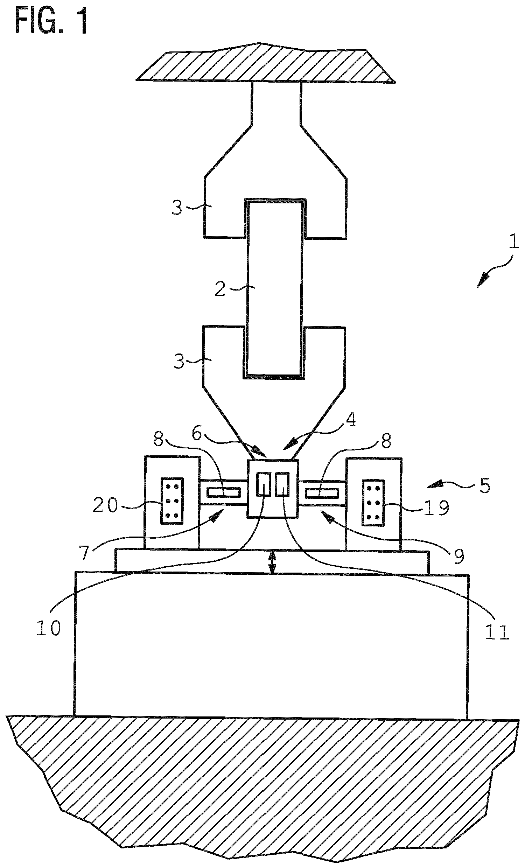

Eine in Fig. 1 exemplarisch dargestellte Kraftmesseinrichtung 1 stellt eine Prüfeinrichtung dar, bei der eine zu prüfende Probe 2 in einem Probenspannzeug 3 aufgenommen ist. Ein freies Ende 4 des Probenspannzeugs 3 ist mit einem Kraftaufnehmer 5 verbunden. Der Kraftaufnehmer 5 weist einen Krafteinleitungsbereich 6 und beabstandet dazu einen Kraftmessbereich 7 auf. In dem Kraftmessbereich 7 ist ein aus mehreren Dehnungsmessstreifen 8 bestehender Kraftsensor 9 angeordnet. Ebenfalls in einem Abstand zu dem Krafteinleitungsbereich 6 sind ein erster Beschleunigungssensor 10 und ein zweiter Beschleunigungssensor 11 an dem Kraftaufnehmer 5 festgelegt.

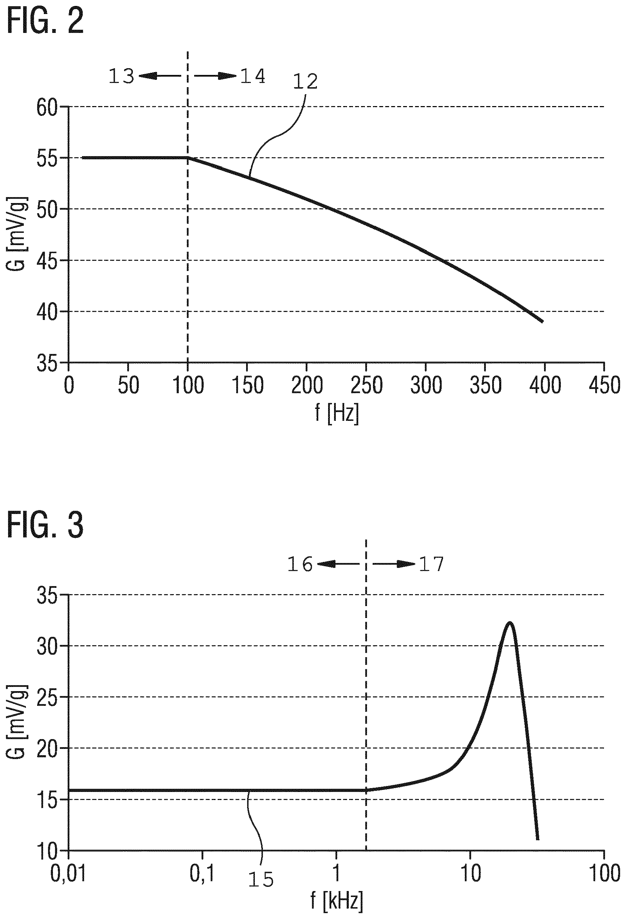

Der erste Beschleunigungssensor 10 weist eine in Fig. 2 schematisch dargestellte Empfindlichkeitskennlinie 12 auf. Die durch einen Übertragungskoeffizient G charakterisierte Empfindlichkeit des ersten Beschleunigungssensors 10 beträgt in einem ersten Messbereich 13 bei einer Frequenz f bis etwa 100 Hz etwa 55 mV/g und nimmt in einem zweiten Messbereich 14 oberhalb von 100 Hz kontinuierlich, jedoch nicht linear ab.

Die in Fig. 3 schematisch dargestellte Empfindlichkeitskennlinie 15 des zweiten Beschleunigungssensors 11 weist einen ersten Messbereich 16 bis etwas oberhalb von 2 kHz mit einem näherungsweise konstanten Übertragungskoeffizienten G von etwa 16 mV/g auf. Oberhalb von 2 kHz steigt der Übertragungskoeffizient G resonanzartig an, um bei etwas mehr als 20 kHz ein Maximum und anschließend einen steilen Abfall aufzuweisen. In diesem zweiten Messbereich 17 weist der zweite Beschleunigungssensor 11 eine stark variierende und nicht lineare Abhängigkeit von der Frequenz auf.

Während der erste Beschleunigungssensor 10 für Messungen in einem Frequenzbereich bis etwa 100 Hz einen besonders hohen Übertagungskoeffizienten G aufweist und deshalb bevorzugt eingesetzt werden kann, weist der zweite Beschleunigungssensor 11 in einem Frequenzbereich zwischen 100 Hz und etwa 1 kHz eine deutlich konstantere Empfindlichkeit als der erste Beschleunigungssensor 10 auf und ist deshalb in diesem Frequenzbereich üblicherweise besser geeignet.

Der Kraftaufnehmer 5 der in Fig. 1 dargestellten Kraftmesseinrichtung 1 ist auf einer Einrichtung 18 zur Erzeugung und Ausübung dynamischer Kräfte angeordnet. Diese Einrichtung 18 kann beispielsweise ein hydraulischer Zylinder oder ein elektromechanischer Shaker sein. Wird die Kraftmesseinrichtung 1 ohne einen in dem Probenspannzeug 3 aufgenommene Probe 2 betrieben, erzeugen die durch die Einrichtung 18 erzeugten Beschleunigungen des Kraftaufnehmers 5 eine Kraftwirkung, die von dem Kraftsensor 9 nachgewiesen wird. Durch eine gleichzeitige Messung der diese Kraftwirkungen verursachenden Beschleunigungen mit dem ersten Beschleunigungssensor 10 oder dem zweiten Beschleunigungssensor 11 kann der systematische Fehler ermittelt und eine Fehlerkorrektur für nachfolgende Messungen mit einer in dem Probespannzeug 3 eingespannten Probe 2 vorbereitet, beziehungsweise vorgegeben werden. Wird mit einer in dem Probenspannzeug 3 eingespannten Probe 2 eine Kraftmessung mit der Kraftmesseinrichtung 1 durchgeführt, so kann mit dem an die mit der Einrichtung 18 erzeugten dynamischen Kräfte angepassten Beschleunigungssensor 10, 11 die auf den Kraftaufnehmer 5 ausgeübten Beschleunigungskräfte ermittelt und zur Kompensation bei der Kraftmessung mit dem Kraftsensor 9 verwendet werden.

Lediglich schematisch sind an dem Kraftaufnehmer 5 eine erste Steckverbindung 19 zur Verbindung des Kraftsensors 9 mit einer externen Auswerteinrichtung und eine zweite Steckverbindung 20 zur Verbindung der beiden Beschleunigungssensoren 10, 11 mit der externen Auswerteinrichtung dargestellt. Die erste Steckverbindung 19 und die zweite Steckverbindung 20 weisen jeweils sechs elektrisch leitende Verbindungskontakte auf.

## Patentansprüche

1. Kraftmesseinrichtung (1) mit einem Kraftaufnehmer (5), der einen Krafteinleitungsbereich (6) und einen Kraftmessbereich (7) aufweist, wobei in dem Kraftmessbereich (7) ein Kraftsensor (9) angeordnet ist, mit einer Einrichtung (18) zur Ausübung dynamischer Kräfte auf den Kraftaufnehmer (5), **dadurch gekennzeichnet, dass** die Kraftmesseinrichtung (1) mindestens zwei Beschleunigungssensoren (10, 11) zur Kompensation des Messfehlers des Kraftsensors (9) umfasst, die mindestens zwei Beschleunigungssensoren (10, 11) unterschiedliche Empfindlichkeitskennlinien (12, 15) aufweisen und beabstandet zu dem Krafteinleitungsbereich (7) an dem Kraftaufnehmer (5) angeordnet sind, und dass ein erster der mindestens zwei Beschleunigungssensoren (10) eine näherungsweise konstante Empfindlichkeit bis mindestens 100 Hz und bei höheren Frequenzen eine abnehmende Empfindlichkeit aufweist, und das ein zweiter der mindestens zwei Beschleunigungssensoren (11) eine näherungsweise konstante Empfindlichkeit bis mindestens 1 kHz aufweist.

2. Kraftmesseinrichtung (1) nach Anspruch 1, **dadurch gekennzeichnet, dass** zwei verschiedene Beschleunigungssensoren (10, 11) an dem Kraftaufnehmer (5) angeordnet sind.

3. Kraftmesseinrichtung (1) nach einem der vorangehenden Ansprüche, **dadurch gekennzeichnet, dass** drei oder mehr Beschleunigungssensoren (10, 11) mit jeweils unterschiedlichen Empfindlichkeitskennlinien an dem Kraftaufnehmer (5) angeordnet sind.

4. Kraftmesseinrichtung (1) nach einem der vorangehenden Ansprüche, **dadurch gekennzeichnet, dass** die Kraftmesseinrichtung (1) für jeden Beschleunigungssensor (10, 11) eine gesonderte Schnittstelle zum Verbinden mit einer Auswerteeinrichtung aufweist.

5. Kraftmesseinrichtung (1) nach Anspruch 2, **dadurch gekennzeichnet, dass** die zwei Beschleunigungssensoren (10, 11) über eine gemeinsame Steckverbindung (20) mit sechs elektrischen Kontakten mit einer Auswerteeinrichtung verbindbar sind.

6. Kraftmesseinrichtung (1) nach einem der vorangehenden Ansprüche, **dadurch gekennzeichnet, dass** die mindestens zwei Beschleunigungssensoren (10, 11) jeweils ein MEMS-Sensor sind.

## Claims

1. Force measuring device (1) with a force transducer (5) which comprises a force application region (6) and a force measuring region (7), wherein a force sensor (9) is arranged in the force measuring region (7), and with a device (18) for exerting dynamic forces on the force transducer (5), **characterised in that** the force measuring device (1) comprises at least two acceleration sensors (10, 11) for compensating the measurement error of the force sensor (9), the at least two acceleration sensors (10, 11) have different sensitivity curves (12, 15) and are arranged on the force transducer (5) so as to be spaced from the force application region (7), and **in that** a first of the at least two acceleration sensors (10) has an approximately constant sensitivity up to at least 100 Hz and a reducing sensitivity at higher frequencies, and **in that** a second of the at least two acceleration sensors (11) has an approximately constant sensitivity up to at least 1 kHz.

2. Force measuring device (1) according to claim 1, **characterised in that** two different acceleration sensors (10, 11) are arranged on the force transducer (5).

3. Force measuring device (1) according to either of the preceding claims, **characterised in that** three or more acceleration sensors (10, 11), each having different sensitivity curves, are arranged on the force transducer (5) .

4. Force measuring device (1) according to any of the preceding claims, **characterised in that** the force measuring device (1) comprises a separate interface, for each acceleration sensor (10, 11), for connection to an evaluation device.

5. Force measuring device (1) according to claim 2, **characterised in that** the two acceleration sensors (10, 11) can be connected to an evaluation device by means of a common plug connection (20) having six electrical contacts.

6. Force measuring device (1) according to any of the preceding claims, **characterised in that** the at least two acceleration sensors (10, 11) are in each case MEMS sensors.

## Revendications

1. Dispositif de mesure de force (1) avec un transducteur de force (5), qui présente une zone d'introduction de force (6) et une zone de mesure de force (7), un capteur de force (9) étant disposé dans la zone de mesure de force (7), avec un dispositif (18) destiné à l'exercice de forces dynamiques sur le transducteur de force (5), **caractérisé en ce que** le dispositif de mesure de force (1) comporte au moins deux capteurs d'accélération (10, 11) en vue de la compensation de l'erreur de mesure du capteur de force (9), les au moins deux capteurs d'accélération (10, 11) présentent des courbes caractéristiques de sensibilité différentes (12, 15) et sont disposés de manière espacée par rapport à la zone d'introduction de force (7) sur le transducteur de force (5), et **en ce qu'**un premier des au moins deux capteurs d'accélération (10) présente une sensibilité approximativement constante jusqu'à au moins 100 Hz et en cas de fréquences plus élevées, une sensibilité décroissante, et **en ce qu'**un second des au moins deux capteurs d'accélération (11) présente une sensibilité approximativement constante jusqu'à au moins 1 kHz.

2. Dispositif de mesure de force (1) selon la revendication 1, **caractérisé en ce que** deux capteurs d'accélération (10, 11) différents sont disposés sur le transducteur de force (5) .

3. Dispositif de mesure de force (1) selon une quelconque des revendications précédentes, **caractérisé en ce que** trois capteurs d'accélération (10, 11) ou plus sont disposés sur le transducteur de force (5) avec des courbes caractéristiques de sensibilité respectives différentes.

4. Dispositif de mesure de force (1) selon une quelconque des revendications précédentes, **caractérisé en ce que** le dispositif de mesure de force (1) présente pour chaque capteur d'accélération (10, 11) une interface spécifique destinée à la connexion avec un dispositif d'évaluation.

5. Dispositif de mesure de force (1) selon la revendication 2, **caractérisé en ce que** les deux capteurs d'accélération (10, 11) sont connectables avec un dispositif d'évaluation via une connexion enfichable commune (20) avec six contacts électriques.

6. Dispositif de mesure de force (1) selon une quelconque des revendications précédentes, **caractérisé en ce que** les au moins deux capteurs d'accélération (10, 11) sont respectivement un capteur MEMS.
